Europäisches Patentamt

European Patent Office

Office européen des brevets

(11) Veröffentlichungsnummer: **0 334 163 B1**

# (12) EUROPÄISCHE PATENTSCHRIFT

(45) Veröffentlichungstag der Patentschrift: **11.11.92**

(21) Anmeldenummer: **89104469.5**

(22) Anmeldetag: **14.03.89**

(51) Int. Cl.⁵: **B29C 47/66**, B29C 47/60

(54) **Schneckenmaschine mit keramischem Verfahrensteil.**

(30) Priorität: **25.03.88 DE 3810079**

(43) Veröffentlichungstag der Anmeldung:
**27.09.89 Patentblatt 89/39**

(45) Bekanntmachung des Hinweises auf die
Patenterteilung:
**11.11.92 Patentblatt 92/46**

(84) Benannte Vertragsstaaten:
**BE CH DE ES FR GB IT LI NL SE**

(56) Entgegenhaltungen:
**EP-A- 0 200 117**
**WO-A-86/02313**
**CH-A- 445 457**
**FR-A- 1 529 539**

**PATENT ABSTRACTS OF JAPAN, Band 11,
Nr. 176 (C-426)[2623], 5. Juni 1987; & JP-A-62
1446 (KYOCERA CORP.) 25-06-1985**

**PATENT ABSTRACTS OF JAPAN, Band 12,
Nr. 171 (M-700)[3018], 21. Mai 1988; & JP-A-62
286 722 (TOYO SODA MFG) 12-12-1987**

**PATENT ABSTRACTS OF JAPAN, Band 10,
Nr. 353 (M-539)[2409], 28. November 1986; &
JP-A-61 152 425 (KOBE STEEL LTD)**

**11-07-1986**

(73) Patentinhaber: **BAYER AG**

**W-5090 Leverkusen 1 Bayerwerk(DE)**

(72) Erfinder: **Pusch, Werner, Dr.
Erich-Ollenhauer-Strasse 20
W-5090 Leverkusen(DE)**
Erfinder: **Ullrich, Martin, Dipl.-Ing.
Mendelssohnstrasse 32
W-5090 Leverkusen(DE)**

## Beschreibung

Die Erfindung geht aus von einer ein- oder mehrwelligen Schneckenmaschine mit einer oder mehreren miteinander in Eingriff befindlichen, von einem Gehäuse umgebenen Schneckenwellen. Schneckenmaschinen aller Art sind z.B. in dem Buch von H. Herrmann, Schneckenmaschinen in der Verfahrenstechnik, Springer-Verlag, Berlin/Heidelberg/New York, 1972, ausführlich beschrieben.

In herkömmlichen Schneckenmaschinen aus Stahl und verwandten metallischen Materialien können hochviskose Medien mit abrasiven oder korrosiven oder aggressiven Phasen nicht verarbeitet werden. Auch bei sehr hohen Temperaturen sind dem Einsatz metallischer Werkstoffe Grenzen gesetzt.

Ferner wird in dem Schweizer Patent CH 445 457 eine Schneckenmaschine beschrieben, deren Gehäuse und Schnekkenwellenbesatz aus einzelnen schmalen, senkrecht zur Achse angeordneten, miteinander verklebten oder verlöteten Lamellen besteht. Aufgrund dieser Art der Verbindung sind solche Schneckenmaschinen jedoch nicht für die obengenannten Prozesse und Anwendung geeignet.

Die Materialeigenschaften keramischer Werkstoffe machen diese in zunehmendem Maße für den Apparate- und Maschinenbau interessant. Für Probleme mit abrasiven Medien gibt es schon verschiedene Lösungen, bei denen Maschinenteile mit Keramik ausgekleidet oder nach einem speziellen Auftragsverfahren mit einer Keramikschicht versehen werden. Wegen der unterschiedlichen thermischen Ausdehnungskoeffizienten der entsprechenden Materialkombinationen treten häufig Probleme hinsichtlich der Standzeit des kombinierten Metall-Keramik-Teils auf.

Es bestand daher die Aufgabe, bei einer Schneckenmaschine für die Anwendung keramischer Werkstoffe eine konstruktive und verfahrenstechnische Lösung zu finden, die dem Werkstoff oder den Werkstoffkombinationen gerecht wird.

Diese Aufgabe wird ausgehend von einer Schneckenmaschine mit einem aus einer Vielzahl von senkrecht zu den Schneckenwellen orientierten Scheiben bestehenden Gehäuse erfindungsgemäß dadurch gelöst, daß der zwischen einer den Verfahrensteil begrenzenden Frontplatte und Stirnplatte liegende Gehäuseteil in Gehäusescheiben aus keramischen Werkstoffen unterteilt ist, die auf mindestens einer Führungsschiene angeordnet und durch einen an der Frontplatte und Stirnplatte fixierten, durchgehenden Anker gegen Verdrehen gesichert sind und dadurch gleichzeitig zusammengehalten werden. Darüber hinaus bestehen auch die Schneckenelemente innerhalb des Verfahrensteils aus einem keramischen Werkstoff.

Die Übertragung des Drehmoments von der Schneckenwelle auf die Schneckenelemente erfolgt zweckmäßig in der Weise, daß die Schneckenwelle im Querschnitt ein Polygonprofil aufweist, das formschlüssig in eine konform geschliffene Nabe der Schneckenelemente paßt.

Vorteilhaft besteht das Gehäuse im Verfahrensteil aus 5 bis 50, vorzugsweise 10 bis 30 Gehäusescheiben. Die Dicke der Gehäusescheiben liegt zweckmäßig im Bereich von 20 mm bis 500 mm, vorzugsweise 30 mm bis 300 mm.

Als keramische Werkstoffe für die Gehäusescheiben haben sich Aluminiumoxid, Zirkonoxid und bevorzugt Siliziumnitrit oder Siliziumcarbid bewährt.

Mit der erfindungsgemäßen Schneckenmaschine können neue, bisher nicht mögliche Chemieprozesse durchgeführt werden, die abrasive, korrosive oder aggressive Phasen enthalten oder deren Prozeßtemperaturen über den thermischen Festigkeitswerten metallischer Werkstoffe liegen. Ein wesentlicher Vorteil dieser konstruktiven Lösung liegt darin, daß die dazu notwendigen Bauelemente mit den heute zur Verfügung stehenden Schleif- und Trennmaschinen mit vernünftigem Aufwand problemlos herzustellen sind. Ein wichtiger Gesichtspunkt ist ferner, daß herkömmliche Schneckenmaschinen erfindungsgemäß modifiziert und umgerüstet werden können.

Im folgenden wird ein Ausführungsbeispiel der Erfindung anhand einer Zeichnung näher erläutert.

Es zeigen:

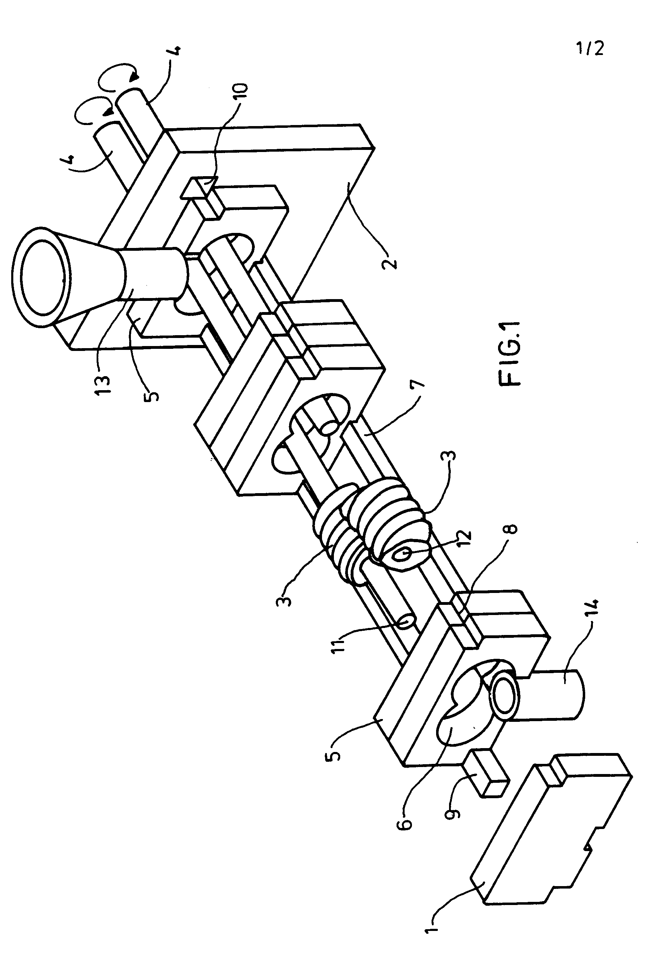

Fig. 1 die wesentlichen Bauelemente der Schneckenmaschine in perspektivischer Darstellung und

Fig. 2a,b das Polygonprofil von Schneckenwelle und Schneckennabe.

Der Verfahrensteil der Schneckenmaschinen wird durch eine Frontplatte 1 und eine Stirnplatte 2 begrenzt. Die Frontplatte schließt den Produkt- bzw. Wellenraum ab. Durch sie werden die Schneckenelemente 3 auf den Wellen 4 festgehalten. Das Schneckengehäuse im Verfahrensteil zwischen Stirnplatte 2 und Frontplatte 1, besteht aus einer Vielzahl von keramischen Gehäusescheiben 5, die senkrecht zur Schneckenachse in Form eines Paketes hintereinander angeordnet sind. Die Zahl und die Dicke der Scheiben ist so bemessen, daß sie im Verfahrensteil dicht hintereinandergepackt sind. Die ebenfalls hintereinanderliegenden Aussparungen 6 in den Scheiben 5 bilden den Produkt- bzw. Reaktionsraum. Die Gehäusescheiben 5 besitzen z.B. eine Dicke von 30 mm. Für den Gehäuseteil im Verfahrensabschnitt sind z.B. 20 solcher Scheiben 5 erforderlich. Die Scheiben bestehen aus Ingenieurkeramik.

Vorzugsweise wird Siliziumnitrit oder Siliziumcarbid verwendet. Außerdem sind die Gehäusescheiben 5 auf einer Führungsschiene 7 angeordnet und werden durch die beiden diagonal gegenüberstehenden, in Ausnehmungen 8 an den Gehäusescheiben 5 eingreifenden Anker 9 zusammengehalten. Zu diesem Zweck sind entsprechende Passungen 10 an Front- und Stirnplatte vorgesehen. Die Gehäusescheiben 5 können aber auch mittels separater axialer Gewindestangen oder durch ein über die Scheiben 5 übergreifendes Joch zusammengehalten werden. Bei einer speziellen Ausführungsform wurde auch eine hydraulische Haltevorrichtung für die Scheiben 5 benutzt. Die Anker 9 verhindern außerdem in Verbindung mit den Ausnehmungen 8, daß sich die Gehäusescheiben 5 beim Betrieb der Schneckenmaschine gegeneinander verdrehen können.

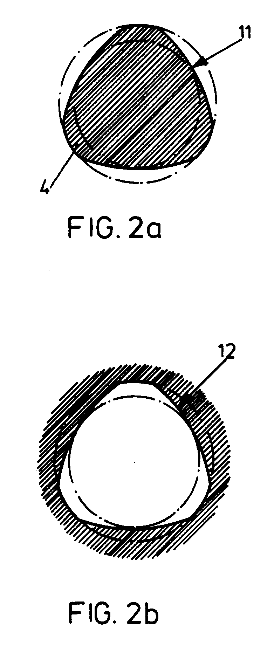

Während bei herkömmlichen metallischen Schneckenmaschinen der Formschluß zwischen Schneckenbesatz und antreibender Kernwelle über Paßfeder- oder Vielzahnverbindungen erfolgt, haben sich bei dem erfindungsgemäßen keramischen Verfahrensteil spezielle Polygonprofile zur Drehmomentübertragung besonders bewährt. Wie aus Fig. 2a und 2b ersichtlich, entsteht ein solches Polygonprofil 11 z.B. in der Weise, daß bei einem gleichseitigen Dreieck die Seiten durch Kreisbögen ersetzt werden und die Ecken ebenfalls abgerundet werden. Die Nabe 12 der Schneckenelemente muß dann konform zum Polygonprofil 11 der Schnek- kenwelle geschliffen sein (Fig. 2b), so daß man die Schneckenelemente 3, z.B. Schneckengewinde mit unterschiedlichen Gangzahlen, unterschiedlicher Steigung, unterschiedlichem Drehsinn sowie Sonderelemente wie Knetscheiben, formschlüssig auf die Wellen 4 aufschieben kann.

Das Polygonprofil überträgt beim Betrieb der Schneckenmaschine das Drehmoment von der Welle auf die Schneckenelemente 3.

Am Anfang und Ende des Verfahrensteils sind die der Front- 1 und Stirnplatte 2 benachbarten Gehäusescheiben 5 derart aufgebohrt, daß von oben ein Rohr 13 für die Produktzufuhr und am anderen Ende von unten ein Rohr 14 für die Produktentnahme angebracht werden kann. Alle anderen Maschinenteile, z.B. Lagerung, Antrieb etc., sind analog zu herkömmlichen Schneckenmaschinen ausgeführt.

## Patentansprüche

1. Ein- oder mehrwellige Schneckenmaschine mit einer oder mehreren miteinander in Eingriff befindlichen, von einem Gehäuse umgebenen Schneckenwellen (4), das sich aus einer Vielzahl von senkrecht zu den Schneckenwellen (4) stehenden Gehäusescheiben (5) zusammensetzt, dadurch gekennzeichnet, daß der zwischen einer den Verfahrensteil begrenzenden Frontplatte (1) und Stirnplatte (2) liegende Gehäuseteil in Gehäusescheiben (5) aus keramischen Werkstoffen unterteilt ist, die auf mindestens einer Führungsschiene (7) angeordnet und durch einen an der Frontplatte (1) und Stirnplatte (2) fixierten, durchgehenden Anker (9) gegen Verdrehen gesichert sind und gleichzeitig zusammengehalten werden und daß auch die Schneckenelemente (3) aus einem keramischen Werkstoff bestehen.

2. Schneckenmaschine nach Anspruch 1, dadurch gekennzeichnet, daß das Gehäuse im Verfahrensteil aus 5 bis 50, vorzugsweise 10 bis 30 Gehäusescheiben (5), besteht.

3. Schneckenmaschine nach Anspruch 1 bis 2, dadurch gekennzeichnet, daß die Dicke der Gehäusescheiben (5) 20 mm bis 500 mm, vorzugsweise 30 mm bis 300 mm, beträgt.

4. Schneckenmaschine nach Anspruch 1 bis 3, dadurch gekennzeichnet, daß die Schneckenwelle (4) und die Nabe der Schneckenelemente (3) ein konformes Polygonprofil (11, 12) für die Drehmomentübertragung aufweisen.

5. Schneckenmaschine nach Anspruch 1 bis 4, dadurch gekennzeichnet, daß der keramische Werkstoff aus Aluminiumoxid, Zirkonoxid, oder bevorzugt aus Siliziumnitrit oder Siliziumcarbid besteht.

## Claims

1. Single-screw or multi-screw extruder having one or more intermeshing screw shanks (4), surrounded by a barrel, which is made up of a plurality of barrel discs (5) standing perpendicular to the screw shanks (4), characterized in that the part of the barrel lying between a front plate (1) and end plate (2) bounding the processing unit is subdivided into barrel discs (5) of ceramic materials, which are arranged on at least one guide rail (7) and are secured against twisting by a continuous anchor (9) fixed on the front Plate (1) and end plate (2) and are at the same time held together and in that the screw elements (3) also consist of a ceramic material.

2. Extruder according to Claim 1, characterized in that, in the processing unit, the barrel consists of 5 to 50, preferably 10 to 30, barrel discs (5).

3. Extruder according to Claim 1 or 2, characterized in that the thickness of the barrel discs (5) is 20 mm to 500 mm, preferably 30 mm to 300 mm.

4. Extruder according to Claims 1 to 3, characterized in that the screw shank (4) and the hub of the screw elements (3) have a conforming polygonal profile (11, 12) for the torque transmission.

5. Extruder according to Claims 1 to 4, characterized in that the ceramic material consists of aluminium oxide, zirconium oxide, or preferably of silicon nitrite or silicon carbide.

**Revendications**

1. Machine à vis sans fin à un ou plusieurs axes avec un ou plusieurs axes de vis sans fin (4) en prise l'un avec l'autre et entourés d'un boîtier qui se compose d'une série de tranches de boîtier (5) disposées perpendiculairement par rapport aux axes de vis sans fin (4), caractérisée en ce que la partie boîtier située entre une plaque frontale (1) et une plaque extrême (2) limitant la partie procédé est répartie en tranches de boîtier (5) en matériau céramique qui sont disposées sur au moins un rail de guidage (7) et simultanément maintenues ensemble et bloquées contre la rotation par une pièce d'ancrage (9) traversante fixée sur la plaque frontale (1) et la plaque extrême (2) et en ce que les éléments en vis sans fin (3) se composent également d'un matériau céramique.

2. Machine à vis sans fin selon la revendication 1, caractérisée en ce que le boîtier dans la partie procédé se compose de 5 à 50, de préférence de 1 à 30 tranches de boîtier (5).

3. Machine à vis sans fin selon les revendications 1 à 2, caractérisée en ce que l'épaisseur des tranches de boîtier (5) est de 20 mm à 500 mm, de préférence 30 mm à 300 mm.

4. Machine à vis sans fin selon les revendications 1 à 3,caractérisée en ce que l'axe de vis sans fin (4) et le moyeu des éléments en vis sans fin (3) présentent un profil polygonal correspondant (11, 12) pour la transmission du couple.

5. Machine à vis sans fin selon les revendications 1 à 4,caractérisée en ce que le matériau céramique est l'oxyde d'aluminium, l'oxyde de zirconium ou, de préférence, le nitrite de silicium ou le carbure de silicium.

FIG.1

FIG. 2a

FIG. 2b